# EUROPEAN PATENT SPECIFICATION

(11) **EP 1 383 633 B1**
(45) Date of publication and mention of the grant of the patent: **02.02.2005**
(21) Application number: 02716566.1
(22) Date of filing: 22.03.2002
(51) Int. Cl.: B26B 29/02, B23Q 13/00

(54) **KNIFE BLADE GUARD**
MESSERKLINGENSCHUTZ
PROTEGE-LAME DE COUTEAU

(30) Priority: 22.03.2001 CA 2341787; 19.02.2002 US 76286
(43) Date of publication of application: 28.01.2004
(73) Proprietor: Kenny, Edwin, Beaconsfield, Quebec H9W 2K5 (CA)
(72) Inventor: Kenny, Edwin, Beaconsfield, Quebec H9W 2K5 (CA)
(74) Representative: Jenkins, Peter David
(86) International application number: PCT/CA2002/000405
(87) International publication number: WO 2002/076690

(56) References cited:
- GB-A- 830 747
- US-A- 2 517 649
- US-A- 2 636 633
- US-A- 2 954 118
- US-A- 5 146 684
- US-A- 5 513 881

## Description

### TECHNICAL FIELD

The present invention relates to knife blade guards and more particularly to a flexible knife blade guard capable of receiving and holding knife blades of varying shapes and sizes.

### BACKGROUND OF THE INVENTION

Blade guards that protect the edges of sharp instruments such as knives and chain saws are well known in the art. These guards may protect either the whole instrument, for example a sheath-like guard, or a sharp edge of the instrument. Such blade guards are typically shaped to conform to the contours of the particular instrument that they cover and are, therefore, not adaptable for use with other instruments that do not have the same shape.

There are numerous devices in the prior art suggesting knife guards for protecting the edge of a knife blade. One such device is shown in U. S. Patent No. 2,517,649 to Frechtmann, issued August 8, 1950. Frechtmann teaches a blade guard for protecting the edges of cutting devices. The blade guard comprises a readily flexible body that fits onto the edge of the blade, and a rigid non-resilient element which runs throughout the guard to maintain the body in a fixed position around the blade edge. An additional non-resilient end-clip is used to retain either side of the guard body against the blade in order to help secure the guard in position. The blade guard is cut to size, from standard lengths, for each blade length for which it is intended. It can be additionally shaped to fit the curvature of the blade to be protected, by cutting notches or darts into the top of the guard body.

None of the prior art devices are resiliently adaptable for use with a variety of blades of different lengths and sizes, without requiring a rigid element for securing the guard in place on the blade.

### SUMMARY OF THE INVENTION

It is, therefore, an object of the present invention to provide a blade guard adapted to be used with several different sharp instruments or knife blades.

It is another object of the present invention to provide a blade guard adapted to conform to the shape of any knife blade, and capable of remaining secured in place without the use of rigid non-resilient elements.

It is a further object of the present invention to provide a blade guard assembly capable of adapting to any length of blade, with the addition of supplemental segments to a minimum length base segment.

Therefore, in accordance with the present invention, there is provided a blade guard comprising: an elongated member of resilient material having a longitudinal axis, the member having a portion of an outer surface extending parallel to the longitudinal axis and spaced therefrom, an elongated slit defined in the member including slit walls defined by the resilient material, the slit extending in a plane extending from the portion of the outer surface inwardly of the member and parallel to the longitudinal axis, whereby the member is adapted to engage the blade of a knife within the slit of the member and the resilience of the material of the slit walls is sufficient for the member to be held on the blade so as to cover a portion of a cutting edge of the blade.

There is also provided, in accordance with the present invention, a blade guard comprising two elongated flexible members of resilient material having a common longitudinal axis, the members abutted end to end and having a portion of an outer surface extending parallel to the longitudinal axis and spaced therefrom, each having an elongated slit defined by the resilient material, the slit extending in a plane extending from the portion of the outer surface inwardly of the member and parallel to the longitudinal axis, whereby the slits of each member are coextensive therewith and adapted to engage a knife blade, the resilience of the material of the slit walls being sufficient for the members to be held on the blade so as to cover a cutting edge of the blade.

### BRIEF DESCRIPTION OF THE DRAWINGS

Further features and advantages of the present invention will become apparent from the following detailed description, taken in combination with the appended drawings, in which:
Fig. 1 is a perspective view of a preferred embodiment of a knife blade guard according to the present invention;
Fig. 2 is a perspective view of the knife blade guard of Fig. 1 with a knife blade edge located within the slit shown in dotted outline;
Fig. 3 is a fragmentary axial cross-section taken through the knife guard showing the blade in position within the guard; and
Fig. 4 is a perspective view of an alternate embodiment of the knife blade guard according to the present invention.

### DETAILED DESCRIPTION OF THE PREFERRED EMBODIMENT

The invention will be described with reference to its use with a knife 24 which has a blade 26 with a cutting edge 28.

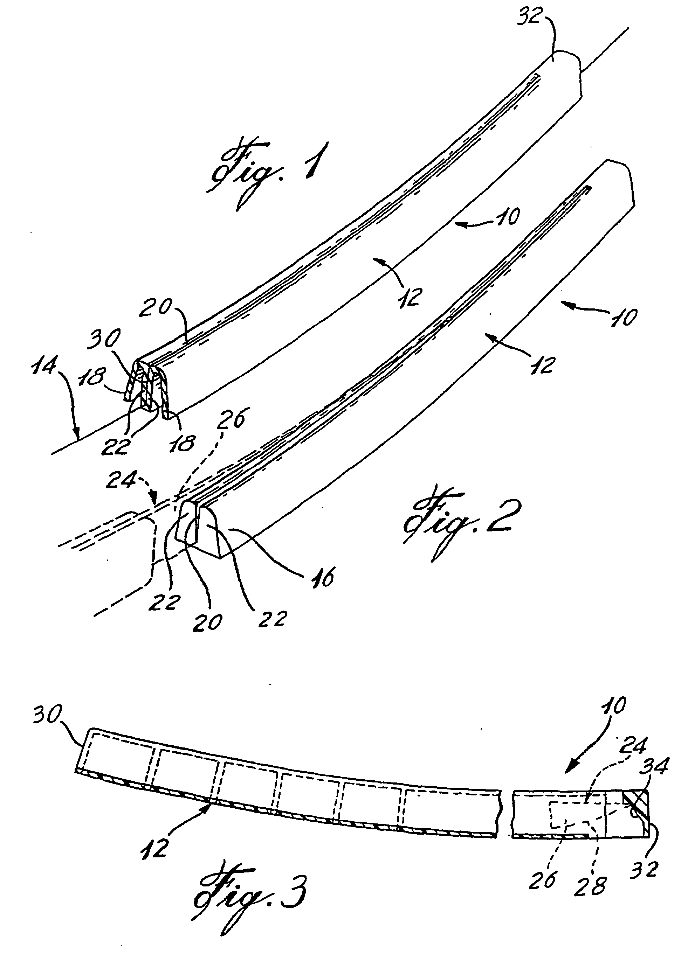

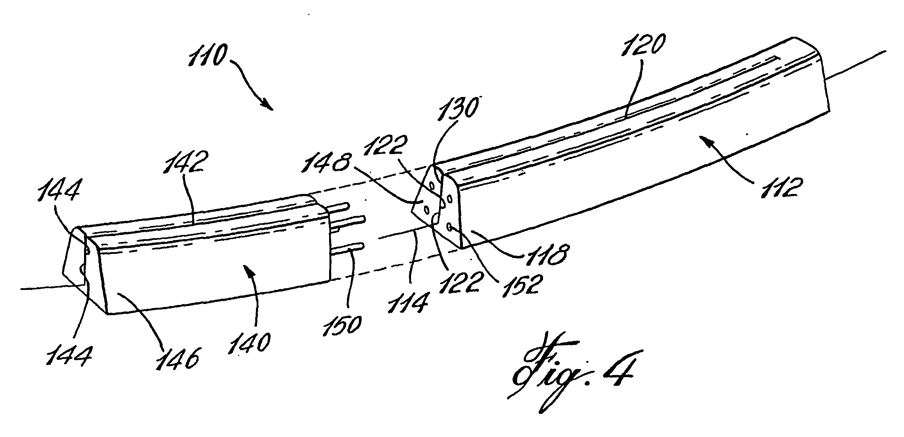

Referring to Figs. 1, 2 and 3, the guard 10 has an elongated member 12 with a longitudinal axis 14 and a skirt portion 16 of an outer surface 18 extending parallel to and spaced from the longitudinal axis 14. A slit 20 is defined in the member 12 and includes slit walls 22 defined by the material of the member 12. The slit 20 extends in a plane extending parallel to the skirt portion 16 and along the longitudinal axis 14. The longitudinal axis 14 defines a curved path within the plane, such that the member 12 has an arched resting shape when viewed in a side elevation. The member 12 is adapted to engage the blade 26 of the knife 24 within the slit 20. The resilience of the material of the slit walls 22 is sufficient for the member 12 to be held on the blade 26, so as to cover the cutting edge 28 of the blade 26.

The member 12 is flexible and is of a length capable of receiving and holding the blade 26. The member 12 is made from resilient material that has a cork-like consistency. The material is preferably a molded plastic material with cork-like properties, for example, low density polyethylene. The member 12 is adapted to engage the blade 26 of the knife 24 by receiving the blade 26 within the slit 20 and the resilient material of the slit walls holding the blade 26 therein.

The slit 20 has an open end 30 and a closed end 32 located opposite the open end 30. When the knife 24 is held in the guard 10, it is positioned so that the tip of the knife blade 26 is located under a hook-shaped cavity 34 within the closed end 32. As a result, the blade 26 is held in a position in which the member 12 can be adapted to curve around the blade 26, thereby securing the cutting edge 28 within the slit walls 22, without requiring any non-resilient retention clips.

The arched. resting shape of the resilient member 12 also aids the retention of the guard on the knife blade. When the tip of the blade is held by the hook-shaped cavity 34 and the member 12 is forced to conform to the shape of the blade, the resilience of the guard material causes longitudinal pressure on the blade edge, as the member 12 tries to return to its resting shape. The lateral frictional resistance between the blade 26 and the slit walls 22 prevents this, and the guard is, therefore, resiliently retained on the knife blade. While the guard 10 preferably has this arched resting shape to ensure blade retention, the guard would adequately function if it had a non-arched resting shape, such that the longitudinal axis 14 was horizontal in a side elevation.

In the embodiment shown, the guard 10 is made of a molded plastic material. In order to provide the proper flexibility and stability, the particular cross-sectioned shapes as shown in Figs. 1 and 2 have been chosen. However, any other shape, including a full body, would be suitable.

In use, the tip of the blade 26 is positioned in the closed end 32 of the slit 20 to be received under the hook-shaped cavity 34. Once the end of the blade 26 is engaged under the hook-shaped cavity 34, the blade 26 can be fully received in the slit 20. The member 12 is flexible and bends to conform to the shape of the blade 26 in order that the slit walls 22 abut the cutting edge 28 and the guard 10 covers at least a portion of the blade 26. Once the cutting edge 28 is received within the slit 20, the resiliency of the material of the slit walls 22 retains the cutting edge 28 therein until the blade 26 is extracted from the guard 10.

When the knife 24 is required for use, the guard 10 can be removed by peeling the member 12 away from the blade 26, beginning at the open end 30. The open end 30 is first removed from the blade 26 and then the remainder of the member 12 is peeled away towards the closed end 32. When the end of the blade 26 is reached, it can be extracted from the hook-shaped cavity, allowing the knife 24 to be released from the guard 10.

Fig. 4 shows a knife guard 110 of an alternate embodiment, having two removably connected member sections, 112 and 140. The first, or base, member 112 has a longitudinal axis 114 and an outer surface 118. Much as in the first embodiment, a slit 120 is defined in the member 112 and includes slit walls 122 defined by the material of the member 112. The slit 120 extends in a plane extending substantially parallel to the outer surface 118, and along the axis 114.

The second, interchangeable, member 140 is generally shorter than the first member 112 and provides additional length for the knife blade guard 110. A slit 142 defined in the second member 140 has slit walls 142 defined by a material of the second member 140. The slit 142 similarly extends in a plane extending substantially parallel to the outer surface 146, and along the longitudinal axis 114 of the first member 112. The second member 140 abuts the first member 112 such that the slit 142 of the second member and the open end 130 of the slit 120 are aligned.

A pin and socket type plug connection retains the first and second members together. As shown in Fig. 4, the protruding pin portions 150 of the second member 140 axially engage with the corresponding socket portions 152 located in the end face 148 of the first member 112. It is to be understood, however, that the pins 150 could equally be located on the first member 112, and the corresponding sockets 152 could be located in the second member 140. The connection shown comprises four pins and four sockets, but fewer or more pins and sockets can be used as required.

The second member 140 can be of any length required to sufficiently cover the cutting edge 28 of a knife blade 26. Preferably, several members 140 of various lengths would be available, so that the knife guard 110 would be able to interchangeably accommodate knives of any length. The guard 110 is similarly comprised of a resilient material, such that the resilience of the material is such that the longitudinal curve and the friction of the slit walls on the knife blade are sufficient to hold the guard 110 on the blade 26.

While the embodiments discussed herein are directed to particular implementations of the invention, it will be apparent that variations of these embodiments are within the scope of the invention. For example, the material of the member can be any material that has resilient cork-like properties and is capable of receiving and retaining a knife blade and flexibly conforming to the shape of the blade. The member can be manufactured to be any desired length and width. The slit can be adapted to extend a greater distance inwardly of the member in order to accommodate larger knife blades.

The embodiments of the invention described above are intended to be exemplary only. The scope of the invention is, therefore, intended to be limited solely by the scope of the appended claims.

## Claims

1. A blade guard comprising an elongated member of resilient material having a longitudinal axis, the member having a portion of an outer surface extending parallel to the longitudinal axis and spaced therefrom, an elongated slit defined in the member including slit walls defined by the resilient material, the slit extending in a plane extending from the portion of the outer surface inwardly of the member and parallel to the longitudinal axis, the slit having an open end and a closed end located opposite the open end, the closed end defining a hook-shaped cavity therein adapted to engage a tip of a blade of a knife, whereby the member is adapted to engage the blade within the slit of the member and the resilience of the material is sufficient for the member to be held on the blade so as to cover a portion of a cutting edge of the blade.

2. A blade guard according to claim 1, wherein the resilient material is cork-like.

3. A blade guard according to claim 1, wherein the resilient material is cork.

4. A blade guard according to claim 1, wherein the resilient material is low-density polyethylene.

5. A blade guard according to claim 1, wherein the elongated member is flexible.

6. A blade guard according to claim 1, wherein the longitudinal axis of the member defines a curved path within said plane extending from the portion of the outer surface inwardly of the member and parallel to the longitudinal axis, such that the member has an arched resting shape.

7. A blade guard according to claim 6, wherein tension resulting from conforming the arched resting shape of the member of resilient material to fit onto the blade, additionally helps to hold the member thereon.

8. A blade guard according to claim 1, wherein the member is of a variable length.

9. A blade guard according to claim 8, wherein the member is made up of two members, a first base member and a second interchangeable member.

10. A blade guard according to claim 9, wherein the first member is of a length adapted to receive a blade of a minimum length, and the second member provides additional guard length as required.

11. A blade guard according to claim 10, wherein each member has a joint face, such that the joint face of the second member abuts the joint face the first member such that the slits of said first and second members are aligned and adapted to receive a blade having a cutting edge, the length of said second member chosen such that the total length of the first and second members covers the cutting edge of the blade.

12. A blade guard according to claim 11, wherein a pin and socket attachment connects the first and second members together.

13. A blade guard comprising two elongated flexible members of resilient material having a common longitudinal axis, the members abutted end to end and having a portion of an outer surface extending parallel to the longitudinal axis and spaced therefrom, each having an elongated slit defined by the resilient material, the slit extending in a plane extending from the portion of the outer surface inwardly of the member and parallel to the longitudinal axis, the slit of one of the members having an open end and a closed end located opposite the open end, the closed end defining a hook-shaped cavity therein adapted to engage a tip of a blade of a knife, whereby the slits of each member are coextensive therewith and adapted to engage the blade, the resilience of the material being sufficient for the members to be held on the blade so as to cover a cutting edge of the blade.

14. A blade guard according to claim 13, wherein the two members are retained together by a pin and socket plug connection.

15. A blade guard according to claim 13, wherein the longitudinal axis of the members defines a curved path within said plane extending from the portion of the outer surface inwardly of the member and parallel to the longitudinal axis, such that the member has a arched resting shape.

## Patentansprüche

1. Ein Klingenschutz mit einem länglichen Element aus elastischem Material mit einer Längsachse, wobei das Element einen Bereich einer äußeren Oberfläche aufweist, der sich parallel zu der Längsachse und von dieser beabstandet erstreckt, wobei ein in dem Element ausgebildeter länglicher Schlitz Schlitzwände aufweist, die durch das elastische Material definiert werden, wobei sich der Schlitz in einer Ebene erstreckt, die sich von dem Bereich der äußeren Oberfläche zum Inneren des Elementes und parallel zu der Längsachse erstreckt, wobei der Schlitz ein offenes Ende und ein gegenüber dem offenen Ende angeordnetes geschlossenes Ende aufweist, wobei in dem geschlossenen Ende ein hakenförmiger Hohlraum ausgebildet ist, der dazu ausgestaltet ist, an einer Spitze einer Klinge eines Messers anzugreifen, wodurch das Element dazu ausgestaltet ist, an der Klinge innerhalb des Schlitzes des Elementes anzugreifen und die Elastizität des Materials ausreicht, um das Element an der Klinge zu halten, so dass ein Bereich einer Schneidkante der Klinge abgedeckt wird.

2. Ein Klingenschutz nach Anspruch 1, wobei das elastische Material korkähnlich ist.

3. Ein Klingenschutz nach Anspruch 1, wobei das elastische Material Kork ist.

4. Ein Klingenschutz nach Anspruch 1, wobei das elastische Material ein Polyethylen mit geringer Dichte ist.

5. Ein Klingenschutz nach Anspruch 1, wobei das längliche Element flexibel ist.

6. Ein Klingenschutz nach Anspruch 1, wobei die Längsachse des Elementes einen gekrümmten Weg innerhalb der Ebene, die sich von dem Bereich der äußeren Oberfläche zum Inneren des Elementes und parallel zu der Längsachse erstreckt, definiert, so dass das Element eine gekrümmte unterstützte Form aufweist.

7. Ein Klingenschutz nach Anspruch 6, wobei Spannung, die daraus resultiert, dass die gekrümmte unterstützte Form des Elementes aus elastischem Material so angepasst wird, dass es auf die Klinge passt, zusätzlich hilft, das Element hierauf zu halten.

8. Ein Klingenschutz nach Anspruch 1, wobei das Element eine variable Länge aufweist.

9. Ein Klingenschutz nach Anspruch 8, wobei das Element aus zwei Elementen besteht, einem ersten Basiselement und einem zweiten austauschbaren Element.

10. Ein Klingenschutz nach Anspruch 9, wobei das erste Element eine Länge aufweist, die dazu angepasst ist, eine Klinge minimaler Länge aufzunehmen, und wobei das zweite Element nach Bedarf zusätzliche Schutzlänge liefert.

11. Ein Klingenschutz nach Anspruch 10, wobei jedes Element eine Verbindungsfläche aufweist, so dass die Verbindungsfläche des zweiten Elementes an der Verbindungsfläche des ersten Elementes anliegt, so dass die Schlitze der ersten und zweiten Elemente ausgerichtet und dazu ausgestaltet sind, eine Klinge mit einer Schneidkante aufzunehmen, wobei die Länge des zweiten Elementes so gewählt ist, dass die Gesamtlänge der ersten und zweiten Elemente die Schneidkante der Klinge abdeckt.

12. Ein Klingenschutz nach Anspruch 11, wobei eine Steckverbindung die ersten und zweiten Elemente miteinander verbindet.

13. Ein Klingenschutz mit zwei länglichen flexiblen Elementen aus elastischem Material mit einer gemeinsamen Längsachse, wobei die Elemente mit ihren Enden aneinander liegen und einen Bereich einer äußeren Oberfläche aufweisen, der sich parallel zu der Längsachse und von dieser beabstandet erstreckt, wobei sie jeweils einen länglichen Schlitz aufweisen, der durch das elastische Material definiert wird, wobei sich der Schlitz in einer Ebene erstreckt, die sich von dem Bereich der äußeren Ebene zum Inneren des Elementes und parallel zu der Längsachse erstreckt, wobei der Schlitz eines der Elemente ein offenes Ende und ein dem offenen Ende gegenüber angeordnetes geschlossenes Ende aufweist, wobei in dem geschlossenen Ende ein hakenförmiger Hohlraum ausgebildet ist, der dazu ausgestaltet ist, an einer Spitze einer Klinge eines Messers anzugreifen, wodurch die Schlitze jedes Elementes sich gemeinsam mit diesem erstrecken und dazu ausgestaltet sind, an der Klinge anzugreifen, wobei die Elastizität des Material ausreicht, um die Elemente auf der Klinge zu halten, so dass eine Schneidkante der Klinge abgedeckt wird.

14. Ein Klingenschutz nach Anspruch 13, wobei die beiden Elemente durch eine Steckverbindung zusammen gehalten werden.

15. Ein Klingenschutz nach Anspruch 13, wobei die Längsachse des Elementes einen gekrümmten Pfad innerhalb der Ebene definiert, die sich von dem Bereich der äußeren Fläche in das Innere des Elementes parallel zu der Längsachse erstreckt, so dass das Element eine gekrümmte unterstützte Gestalt hat.

## Revendications

1. Protège-lame comprenant un organe allongé d'un matériau résilient ayant un axe longitudinal, l'organe ayant une partie d'une surface externe s'étendant parallèle à l'axe longitudinal et espacée de celui-là, une fente allongée définie dans l'organe qui inclut des parois de fente définies par le matériau résilient, la fente s'étendant dans un plan qui s'étend depuis la partie de la surface externe vers l'intérieur de l'organe et parallèle à l'axe longitudinal, la fente ayant une extrémité ouverte et une extrémité fermée située à l'opposée de l'extrémité ouverte, l'extrémité fermée définissant en elle une cavité en forme de crochet adaptée pour mettre en prise une pointe d'une lame d'un couteau, de sorte que l'organe est adapté pour mettre en prise la lame à l'intérieur de la fente de l'organe et l'élasticité du matériau est suffisante pour que l'organe soit maintenu sur la lame de sorte à recouvrir une partie d'un bord tranchant de la lame.

2. Protège-lame selon la revendication 1, dans lequel le matériau résilient est comme du liège.

3. Protège-lame selon la revendication 1, dans lequel le matériau résilient est du liège.

4. Protège-lame selon la revendication 1, dans lequel le matériau résilient est un polyéthylène à faible densité.

5. Protège-lame selon la revendication 1, dans lequel l'organe allongé est flexible.

6. Protège-lame selon la revendication 1, dans lequel l'axe longitudinal de l'organe défini un trajet en courbe à l'intérieur dudit plan qui s'étend depuis la partie de la surface externe vers l'intérieur de l'organe et parallèle à l'axe longitudinal, de telle sorte que l'organe a une forme qui est arquée.

7. Protège-lame selon la revendication 6, dans lequel la tension, qui résulte de la conformité de la forme étant arquée de l'organe du matériau résilient à tenir sur la lame, aide, en outre, à maintenir l'organe sur elle.

8. Protège-lame selon la revendication 1, dans lequel l'organe est d'une longueur variable.

9. Protège-lame selon la revendication 8, dans lequel l'organe est composé de deux organes, un premier organe de base et un second organe interchangeable.

10. Protège-lame selon la revendication 9, dans lequel le premier organe est d'une longueur adaptée pour recevoir une lame d'une longueur minimale et le second organe prévoit une longueur de protection supplémentaire comme requis.

11. Protège-lame selon la revendication 10, dans lequel chaque organe a une face de jointure de telle sorte que la face de jointure du second organe vient en butée contre la face de jointure du premier organe de telle sorte que les fentes desdits premier et second organes sont alignées et adaptées pour recevoir une lame ayant un bord tranchant, la longueur dudit second organe étant choisie de telle sorte que la longueur totale des premier et second organes recouvre le bord tranchant de la lame.

12. Protège-lame selon la revendication 11, dans lequel une fixation mâle - femelle raccorde ensemble les premier et second organes.

13. Protège-lame comprenant deux organes flexibles allongés d'un matériau résilient ayant un axe longitudinal commun, les organes étant en butée bout à bout et ayant une partie d'une surface externe s'étendant parallèle à l'axe longitudinal et espacée de celui-là, chacun ayant une fente allongée définie par le matériau résilient, la fente s'étendant dans un plan qui s'étend depuis la partie de la surface externe vers l'intérieur de l'organe et parallèle à l'axe longitudinal, la fente de l'un des organes ayant une extrémité ouverte et une extrémité fermée située opposée à l'extrémité ouverte, l'extrémité fermée définissant une cavité en forme de crochet en elle adaptée pour mettre en prise une pointe d'une lame d'un couteau, de sorte que les fentes de chaque organe sont d'une même étendue que celle-là et adaptées pour mettre en prise la lame, l'élasticité du matériau étant suffisante pour que les organes soient maintenus sur la lame de sorte à recouvrir un bord tranchant de la lame.

14. Protège-lame selon la revendication 13, dans lequel les deux organes sont retenus ensemble par un raccordement à fiches mâle - femelle.

15. Protège-lame selon la revendication 13, dans lequel l'axe longitudinal des organes définit un trajet en courbe à l'intérieur dudit plan qui s'étend depuis la partie de la surface externe vers l'intérieur de l'organe et parallèle à l'axe longitudinal de telle sorte que l'organe a une forme qui est arquée.
